# EUROPEAN PATENT APPLICATION

(11) **EP 3 735 064 A1**
(43) Date of publication of application: **04.11.2020**
(21) Application number: 17936227.2
(22) Date of filing: 28.12.2017
(51) Int. Cl.: H04W 72/04, H04W 16/28, H04W 72/12

(54) **USER TERMINAL AND RADIO COMMUNICATION METHOD**

(71) Applicant: NTT DOCOMO, INC., Chiyoda-ku Tokyo 100-6150 (JP)
(72) Inventor: TAKEDA, Kazuki, Tokyo 100-6150 (JP); NAGATA, Satoshi, Tokyo 100-6150 (JP); LIU, Min, Beijing 100190 (CN); NA, Chongning, Beijing 100190 (CN); KAKISHIMA, Yuichi, Palo Alto, California 94304 (US)
(74) Representative: Hoffmann Eitle
(86) International application number: PCT/JP2017/047332
(87) International publication number: WO 2019/130571

(57) **Abstract**

The present invention is directed to reducing the decline in communication throughput, communication quality and so forth eve when communication is controlled by taking into account quasi-co-location (QCL), a user terminal, according to one aspect of the present invention, has a receiving section that receives a downlink shared channel scheduled by downlink control information, and a control section that, when an offset between the downlink control information and the downlink shared channel is less than a given value, controls the receipt of the downlink shared channel based on one transmission configuration indicator state that corresponds to a specific control resource set.

## Description

### Technical Field

The present disclosure relates to a user terminal and a radio communication method in next-generation mobile communication systems.

### Background Art

In the UMTS (Universal Mobile Telecommunications System) network, the specifications of LTE (Long Term Evolution) have been drafted for the purpose of further increasing high speed data rates, providing lower latency and so on (see non-patent literature 1). Also, the specifications of LTE-A (also referred to as "LTE-advanced," "LTE Rel. 10," "LTE Rel. 11," or "LTE Rel. 12") have been drafted for further broadbandization and increased speed beyond LTE (also referred to as "LTE Rel. 8" or "LTE Rel. 9"), and successor systems of LTE (also referred to as, for example, "FRA (Future Radio Access)," "5G (5th generation mobile communication system)," "NR (New Radio)," "NX (New radio access)," "FX (Future generation radio access)," "LTE Rel. 13," "LTE Rel. 14," "LTE Rel. 15" or later versions) are under study.

In LTE Rel. 10/11, carrier aggregation (CA) to integrate multiple component carriers (CC) is introduced in order to achieve broadbandization. Each CC is configured with the system bandwidth of LTE Rel. 8 as 1 unit. In addition, in CA, multiple CCs under the same radio base station (also referred to as "eNB (eNodeB)") are configured in a user terminal (also referred to as "UE (User Equipment)").

Meanwhile, in LTE Rel. 12, dual connectivity (DC), in which multiple cell groups (CGs) formed with different radio base stations are configured in UE, is also introduced. Each cell group is comprised of at least one cell (CC). Given that multiple CCs of different radio base stations are aggregated in DC, DC is also referred to as "inter-base station CA (inter-eNB CA)" and the like.

In existing LTE systems (for example, LTE Rel. 8 to 13), a user terminal receives downlink control information (DCI) via a downlink (DL) control channel (for example, PDCCH (Physical Downlink Control CHannel), EPDCCH (Enhanced Physical Downlink Control CHannel), MPDCCH (Machine-type communication (MTC) Physical Downlink Control CHannel), etc.). Based on this DCI, the user terminal receives DL data channels (for example, PDSCH (Physical Downlink Shared CHannel)) and/or transmits UL data channels (for example, a physical uplink shared channel)).

### Citation List

### Non-Patent Literature

Non-Patent Literature 1: 3GPP TS36.300 V8.12.0 "Evolved Universal Terrestrial Radio Access (E-UTRA) and Evolved Universal Terrestrial Radio Access Network (E-UTRAN); Overall Description; Stage 2 (Release 8)," April, 2010

### Summary of Invention

### Technical Problem

Furthermore, future radio communication systems (for example, NR, 5G, etc.) are under study to allow communication using beamforming (BF). In order to improve the quality of communication using BF, studies are in progress so as to control transmission/receipt of signals by taking into account the quasi-co-location (QCL) of multiple signals.

For example, when the UE receives a downlink control channel (PDSCH), the accuracy of receipt can be improved by performing receiving processes by taking into account the reference signal (DL-RS) that is quasi-co-located (QCL) with the PDSCH. In this case, the UE needs to find information about the QCL of a given DL signal (QCL information), but how to control the judgment of QCL in the UE has not been studied much. If the UE cannot judge QCL properly, there is a possibility there will be a decline in communication throughput, communication quality and so forth.

It is therefore an object of the present disclosure to provide a user terminal and a radio communication method, whereby, even when communication is controlled by taking into account quasi-co-location (QCL), it is still possible to reduce the decline in communication throughput, communication quality and so forth.

### Solution to Problem

According to one aspect of the present disclosure, a user terminal has a receiving section that receives a downlink shared channel scheduled by downlink control information, and a control section that, when an offset between the downlink control information and the downlink shared channel is less than a given value, controls the receipt of the downlink shared channel based on one transmission configuration indicator state that corresponds to a specific control resource set.

### Advantageous Effects of Invention

According to one aspect of the present disclosure, even when communication is controlled by taking into account quasi-co-location (QCL), it is still possible to reduce the decline in communication throughput, communication quality and so forth.

### Brief Description of Drawings

FIG. 1 is a diagram to show an example of DCI transmitted in a control resource set and PDSCH scheduled by that DCI;
FIG. 2 is a diagram to show examples of TCI states corresponding to control resource sets, according to a first example of the present disclosure;
FIG. 3 is a diagram to show examples of TCI states corresponding to control resource sets, according to a second example of the present disclosure;
FIG. 4 is a diagram to show examples of TCI states corresponding to control resource sets, according to a third example of the present disclosure;
FIG. 5 is a diagram to show an exemplary schematic structure of a radio communication system according to the present embodiment;
FIG. 6 is a diagram to show an exemplary overall structure of a radio base station according to the present embodiment;
FIG. 7 is a diagram to show an exemplary functional structure of a radio base station according to the present embodiment;
FIG. 8 is a diagram to show an exemplary overall structure of a user terminal according to the present embodiment;
FIG. 9 is a diagram to show an exemplary functional structure of a user terminal according to the present embodiment; and
FIG. 10 is a diagram to show an exemplary hardware structure of a radio base station and a user terminal according to the present embodiment.

### Description of Embodiments

Envisaging future radio communication systems, based on the states of transmission configuration indicators (TCIs) (TCI states), studies are underway to control the receipt of DL signals (for example, downlink control channel and/or downlink shared channels, etc.). The TCI state is used to report information about the quasi-co-location (QCL) of a DL signal (or the port of a reference signal (for example, DMRS) for a DL signal).

Quasi-co-location (QCL) is an indicator that indicates the statistical nature of a channel. For example, when a PDSCH (or a PDSCH DMRS) and a reference signal (for example, a reference signal for channel state measurement (CSI-RS), a synchronization signal block (SSB), etc.) are quasi-co-located (QCL), it is possible to assume that at least one of the space, the average gain, the delay, and the doppler parameter is the same between these different signals.

The TCI state includes, for example, information about the QCL-based relationship between multiple signals. For example, information to show the QCL relationship between a PDSCH (or a PDSCH DMRS port) and a given reference signal (DL-RS) is included in the TCI state. That is, the TCI state corresponds to a parameter for reporting QCL.

When multiple reference signal sets (RS sets) are configured in UE, the TCI may be configured to include information for specifying a given reference signal that holds the QCL relationship with the PDSCH (or the DMRS port for the PDSCH) among the reference signals included in the RS sets. Note that DMRS ports may be a DMRS port group that includes multiple DMRS ports, and DMRS ports as used in the present specification may be interpreted as a DMRS port group.

Also, the TCI state may include information to show the QCL relationship between a PDCCH (or a PDCCH DMRS port) and a given reference signal (DL-RS). Alternatively, the TCI state may include information to show the QCL relationship between a control resource set (CORESET) for transmitting a PDCCH and a given reference signal (DL-RS).

A resource for a DL-RS (also referred to as a "DL-RS resource") may be associated with a resource and/or a port for a synchronization signal block (SSB) or a channel state measurement RS (CSI-RS (Channel State Information RS)). Note that an SSB may be referred to as an "SS/PBCH (Physical Broadcast CHannel) block" and the like.

The DL-RS may be at least one of a primary synchronization signal (PSS), a secondary synchronization signal (SSS), a mobility reference signal (MRS), a CSI-RS, a demodulation reference signal (DMRS), a beam-specific signal and so forth, or may be a signal formed by enhancing and/or modifying these signals (for example, a signal formed by changing the density and/or the cycle).

A control resource set (CORESET) is a field in which a downlink control channel for transmitting downlink control information is allocated, and is comprised of radio resources formed with a given frequency field and a time field (for example, 1 OFDM symbol, 2 OFDM symbols, etc.). A control resource set is comprised of a given resource unit, and can be configured to be equal to or less than the system bandwidth (carrier bandwidth) or the maximum bandwidth where the user terminal can perform receiving processes.

For example, a control resource set may be comprised of one or more RBs (PRBs and/or VRBs) in the frequency direction. Here, an RB refers to, for example, a frequency resource block unit comprised of 12 subcarriers. The UE can monitor for downlink control information within the range of the control resource set, and control receipt. By this means, in the receiving process of downlink control information, the UE does not have to keep monitoring the whole system bandwidth at all times, so that its power consumption can be reduced.

Also, a control resource set refers to resources where downlink control information is mapped, or a resource frame for accommodating an NR-PDCCH. Furthermore, control resource set can be defined depending on the size of resource units. For example, the size of one control resource set can be configured to be an integer multiple of the size of a resource unit. Also, a control resource set may be comprised of consecutive or non-consecutive resource units. A resource unit refers to the fundamental unit of resources to allocate to the NR-PDCCH, and may be one of an NR-CCE, an NR-REG and an NR-REG group.

Also, one or more (for example, K) TCI states are configured for each set of control resources configured in the UE. The TCI state configured in each control resource set may be reported from the base station to the UE by higher layer signaling or the like.

When multiple TCI states are configured in association with control resource sets (K>1), the base station reports and activates given TCI states (for example, one TCI state) to the UE. Note that the report may be sent from the base station to the UE by using MAC CE or the like. When using this MAC CE, the UE reports the index of the control resource set (CORESET) in which the TCI state changes, and one TCI state that is configured in association with that CORESET, by using the MAC CE included in a PDSCH. Note that, for a CORESET in which the TCI state changes, two or more TCI state candidates may be configured in advance by RRC signaling and the like.

Also, if one or more CORESETs' TCI states are reported in the MAC CE contained in a given PDSCH, after a given period (for example, 4 slots, 10 symbols, and so forth) has passed since the PDSCH was received, the user terminal receives (including performing channel estimation, demodulation, etc.) the PDCCH to monitor based on the parameters of these CORESETs, assuming the TCI states configured. Obviously, the reporting method is not limited to this. Meanwhile, when one TCI state is configured in association with a control resource set (K=1), it is not necessary to report the TCI state (MAC CE transmission) from the base station to the UE.

The UE controls the receiving processes (for example, the decoding process, the demodulation process, etc.) for the PDSCH on the assumption that the PDSCH (or the PDSCH's DMRS port) and a given reference signal are quasi-co-located (QCL) based on a given TCI state. In this way, when receiving a PDSCH, the UE may perform receiving processes by taking into account a reference signal (DL-RS) that is quasi-co-located (QCL) with the PDSCH, so that the accuracy of receipt can be improved.

The UE controls the receiving processes (for example, the decoding process, the demodulation process, etc.) for the PDSCH on the assumption that the PDSCH (or the PDSCH's DMRS port) and a given reference signal are quasi-co-located (QCL), based on a given TCI state. Note that the PDCCH and the CORESET may be read interchangeably.

Also, information about the TCI state to use to demodulate a PDSCH is likely to be included in downlink control information (DCI) that is transmitted in a downlink control channel allocated to the control resource set, and reported from the base station to the UE. For example, the base station may configure a field for reporting TCI (transmission configuration indication) (TCI field) in DCI, and report the TCI to the UE. The TCI field may be configured with given bits (for example, 3 bits). Also, whether to provide a TCI field in DCI may be controlled based on a report from a base station (for example, higher layer signaling).

The UE determines the QCL of the PDSCH antenna port (PDSCH antenna port quasi-co-location) based on the TCI state corresponding to the TCI reported in the TCI field of DCI. For example, UE assumes that the antenna port of the DMRS port (or the DMRS port group) for the PDSCH of the serving cell and the reference signal (DL-RS) corresponding to the TCI state reported in the DCI are quasi-co-located (QCL).

In this way, the UE determines the QCL of the PDSCH (or the PDSCH DMRS port) based on the TCI state reported in DCI and controls receiving processes, so that receiving processes can be performed properly.

Meanwhile, depending on the value of the offset between the timing to receive DCI that schedules a PDSCH (also referred to as "DL DCI" or "DL assignment") and the timing to receive the PDSCH, there is also a possibility that the TCI reported by DCI cannot be used. Here, the offset may be referred to as a "scheduling offset" or a "time offset."

For example, if the offset between the receipt of DCI and the receipt of the PDSCH corresponding to that DCI is larger than a given value, the UE can determine the PDSCH's QCL based on the TCI included in the DCI. This is because, after the UE receives DCI, a given amount of time can be reserved until the UE performs receiving processes for the PDSCH based on the TCI (QCL information) included in the DCI.

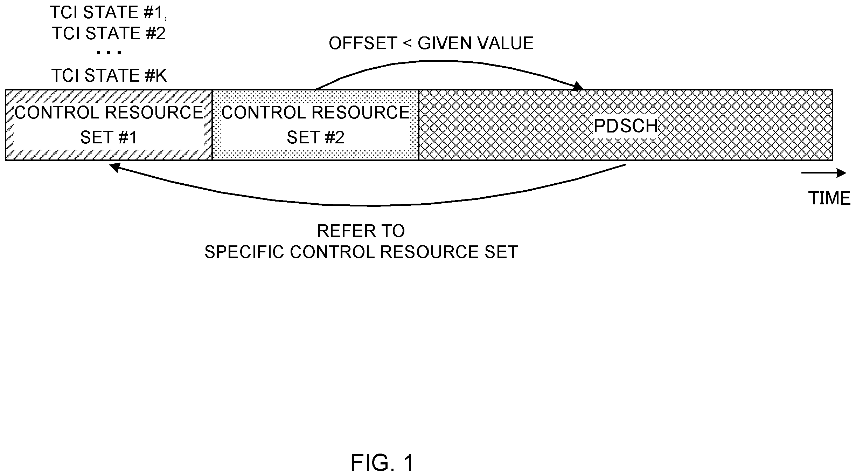

Meanwhile, if the offset between the receipt of DCI and the receipt of the PDSCH corresponding to that DCI is less than a given value (or below a given value), it is difficult to control the receiving processes for the PDSCH based on the TCI included in the DCI (see FIG. 1). This is because, after the UE receives DCI, a given amount of time can be reserved until the UE performs receiving processes for the PDSCH based on the TCI (QCL information) included in the DCI.

FIG. 1 shows a case in which a PDSCH is scheduled by DCI transmitted in the PDCCH of control resource set #2. Here, since the offset between the DCI transmitted in control resource set #2 and the PDSCH is less than a given value, it is not possible to control the receiving processes for the PDSCH based on the TCI included in the DCI.

If the offset between DCI and the PDSCH corresponding to that DCI is less than a given value, the present inventors focused on being able to utilize other TCI states instead of using the TCI state corresponding to the TCI included in DCI.

To be more specific, if the offset is less than a given value, the QCL is determined based on the TCI state applied or configured for a specific control resource set (or PDCCH of control resource set) in a given slot. The specific control resource set here may be, for example, the control resource set with the smallest index.

In this case, in the latest slot in which one or more control resource sets are configured, the UE judges that the RS corresponding to the TCI state of the control resource set with the smallest index and the antenna port of the PDSCH DMRS port group are quasi-co-located (QCL), and controls the receipt of the PDSCH. Referring to FIG. 1, the receipt of the PDSCH is controlled based on the TCI state corresponding to control resource set #1 configured before control resource set #2 in the time direction. By this means, even when a TCI included in DCI cannot be used, it is still possible to judge QCL and receive the PDSCH.

Meanwhile, the present inventors have also focused on the fact that multiple TCI states can be configured in association with a control resource set. When multiple TCI states (TCI state #1, TCI state #2, ..., TCI state #K) are configured in association with a specific control resource set (for example, the control resource set with the smallest index) in a given slot, the problem is based on which one of the multiple TCI states the receipt of the PDSCH should be controlled.

So, the present inventors have come up with the idea of controlling the receipt of a PDSCH based on one TCI state that corresponds to (or that is associated with) a specific control resource set, when the offset between the receipt of DCI and the PDSCH corresponding to that DCI is less than a given value (or less than or equal to a given value).

Now, embodiments of the present invention will be described below in detail with reference to the accompanying drawings. Note that although the following description will describe cases in which the PDSCH is demodulated based on TCI states, the present embodiment is not limited to this. The present embodiment can be applied to operations to use TCI states (for example, receiving processes for other signals or channels). Also, in the following description, QCL may be interpreted as QCL in space (spatially quasi-co-located). Also, although the following description will illustrate cases in which the specific control resource set which the UE references is the control resource set with the smallest index (CORESET with the lowest ID) in a given slot, the specific control resource set is by no means limited to this.

### (First Example)

With a first example of the present invention, a case will be described below in which, when the offset between DCI and the PDSCH corresponding to that DCI is less than a given value, the TCI states to configure for a specific control resource set which UE references is limited (limited to one, for example).

A base station configures a plurality of (K (n)) TCI states, via higher layer signaling, in association with each control resource set configured in the UE. Here n=0, 1, ..., N-1.

Also, the base station exerts control so that, at least for each control resource set, other than a specific control resource set (n=0), one TCI state that is selected from among a number of TCI states is reported and/or activated. For example, the base station may report one TCI state in association with each control resource set other than a specific control resource set, by using MAC CE.

The base station may exert control so that one TCI state (for example, K (0)=1) is configured for a specific control resource set (n=0). That is, only one limited TCI state is configured for a specific control resource set. The UE may assume that one specific TCI state is configured for a specific control resource set (that is, two or more TCI states are never configured), and control PDSCH receiving processes based on this TCI state.

For example, when the base station configures TCI states using higher layer signaling for a specific control resource set, the base station may configure only one TCI state. Alternatively, the base station may configure multiple TCI states for a specific control resource set, via higher layer signaling, as with other control resource sets, and configure one specific TCI state for the specific control resource set on the UE side.

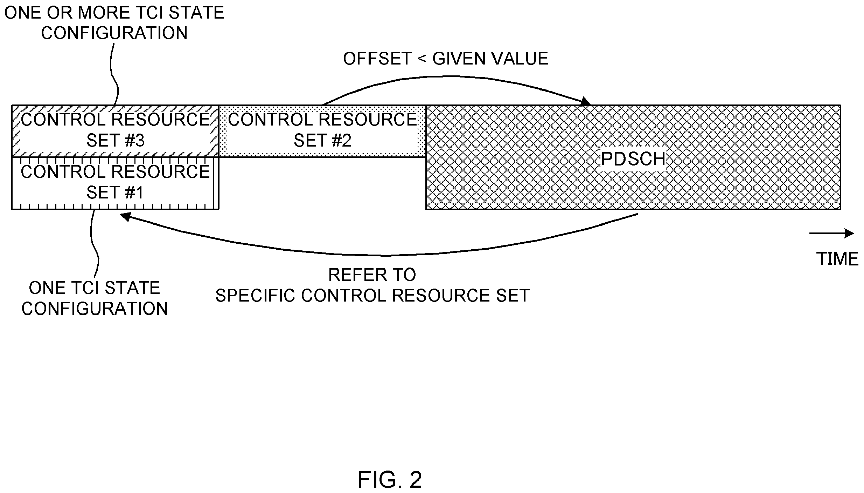

FIG. 2 shows a case in which, when the offset between the DCI that is transmitted in control resource set #2 and a PDSCH is less than a given value, the receipt of the PDSCH is controlled based on the TCI state of a specific control resource set.

Here, a case is shown in which control resource set #1 and control resource set #3 are configured in UE in a given slot (latest slot) before control resource set #2 in the time direction. Control resource set #1 and control resource set #3 may be configured in the same slot as or different slots from control resource set #2.

In addition, a case is shown here in which control resource set #1 and control resource set #3 are multiplexed in the frequency direction. Note that control resource set #1 and control resource set #3 may be multiplexed in the time direction. Note that the number of control resource sets and the allocation of control resource sets are not limited to the configuration shown in FIG. 2.

If the offset between the DCI of control resource set #2 and a PDSCH is less than a given value, the UE judges QCL based on the TCI state corresponding to a specific control resource set among the control resource sets configured for the UE in a given slot. In FIG. 2, the UE controls the receiving process for PDSCH using the TCI state corresponding to control resource set #1 (used to report PDCCH QCL of control resource set #1).
one TCI state is configured in control resource set #1. Meanwhile, one TCI state may be configured in control resource set #1. That is, the number of TCI states configured in control resource set #1 (or activated), which is a specific control resource set, is limited to one.

The UE assumes that only one TCI state is configured for control resource set #1 and selects the TCI state to configure in control resource set #1. The TCI state configured in control resource set #1 may be previously reported by higher layer signaling, or may be defined in the specification.

Thus, the number of TCI states configured in association with a specific control resource set is limited (for example, limited to one), so that even when a TCI included in DCI cannot be used, the UE can easily select the TCI states to use for PDSCH receiving processes. By this means, the PDSCH receiving processes can be performed properly, so that it is possible to reduce the decline in communication throughput, communication quality and so forth.

### (Second Example)

With a second example of the present invention, a case will be described below, in which, when the offset between DCI and the PDSCH corresponding to that DCI is less than a given value, UE selects the TCI states to correspond to a specific control resource set based on given conditions.

A base station configures a plurality of (K (n)) TCI states, via higher layer signaling, in association with each control resource set configured in the UE. Here n=0, 1, ..., N-1.

Also, the base station exerts control so that, at least for each control resource set other than a specific control resource set (n=0), one TCI state that is selected from among a number of TCI states is reported and/or activated. For example, the base station may report one TCI state in association with each control resource set other than a specific control resource set, by using MAC CE.

The specific TCI state is associated with a specific control resource set (n=0) based on given conditions. The specific TCI state may be, for example, the TCI state with the smallest index among the configured TCI states. Note that the specific TCI state may be configured to be determined based on other parameters besides the index of the TCI state.

If no other TCI states besides the specific TCI state are reported (or activated) in MAC CE, the UE assumes that the TCI state with the smallest index corresponds to a specific control resource set. That is, when multiple TCI states are configured in association with a specific control resource set, the UE may assume that the TCI state with the minimum index is active, and control the receiving processes for the PDSCH based on that TCI state.

If a TCI state other than the specific TCI state is reported (or activated) in MAC CE for the specific control resource set, the UE may control the receiving processes for the PDSCH based on the reported TCI state. This allows one TCI state to be selected that corresponds to a specific control resource set, regardless of whether or not the MAC CE is reported.

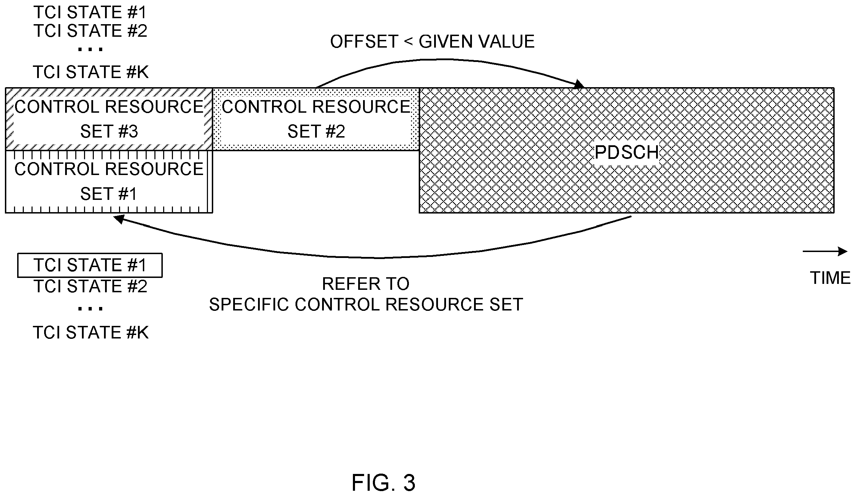

FIG. 3 shows a case in which, when the offset between the DCI that is transmitted in control resource set #2 and a PDSCH is less than a given value, the receipt of the PDSCH is controlled based on the TCI state of a specific control resource set.

Here, a case is shown in which control resource set #1 and control resource set #3 are configured in UE in a given slot (latest slot) before control resource set #2 in the time direction. Control resource set #1 and control resource set #3 may be configured in the same slot as or different slots from control resource set #2.

In addition, a case is shown here in which control resource set #1 and control resource set #3 are multiplexed in the frequency direction. Note that control resource set #1 and control resource set #3 may be multiplexed in the time direction. Note that the number of control resource sets and the allocation of control resource sets are not limited to the configuration shown in FIG. 3.

If the offset between the DCI of control resource set #2 and a PDSCH is less than a given value, the UE judges QCL based on the TCI state corresponding to a specific control resource set among the control resource sets configured for the UE in a given slot. In FIG. 3, the UE controls the receiving process for the PDSCH by using the TCI state corresponding to control resource set #1 (used to report the PDCCH QCL of control resource set #1).

A number of TCI states may be configured in control resource set #1. The UE assumes that a specific TCI state is active among the TCI states configured in association with control resource set #1, and controls the receiving processes for the PDSCH based on that specific TCI state. The specific TCI state may be, for example, the TCI state with the smallest index (here, TCI state #1). Also, if a TCI state other than the specific TCI state is reported in MAC CE, the UE may control the receipt of the PDSCH based on the other TCI state that is reported.

In this way, one TCI state selected based on a given condition is used from among the TCI states configured in the UE, so that even when a TCI included in DCI cannot be used, it is possible to easily select the TCI states to use in PDSCH receiving processes. By this means, the PDSCH receiving processes can be performed properly, so that it is possible to reduce the decline in communication throughput, communication quality and so forth.

### (Third Example)

With a third example of the present invention, a case will be described below, in which, when the offset between DCI and the PDSCH corresponding to that DCI is less than a given value, the TCI state of a specific control resource set is used to receive another signal (for example, system information). The TCI state to use to receive system information (for example, RMSI (Remaining Minimum System Information)) may be, for example, the TCI state that is applied to the control resource set for transmitting system information and/or the TCI state that is applied to the PDCCH that schedules system information.

A base station configures a plurality of (K (n)) TCI states, via higher layer signaling, in association with each control resource set configured in the UE. Here n=0, 1, ..., N-1.

Also, the base station exerts control so that, at least for each control resource set, other than a specific control resource set (n=0), one TCI state that is selected from among a number of TCI states is reported and/or activated. For example, the base station may report one TCI state in association with each control resource set other than a specific control resource set, by using MAC CE.

As a TCI state to correspond to a specific control resource set (n=0), the TCI state that is used when receiving system information is associated. For example, the UE may assume that the TCI state of a specific control resource set (n=0) is the TCI state for the control resource set for transmitting system information and/or the TCI state for the PDCCH that schedules system information.

By this means, regardless of which TCI state is configured in association with a specific control resource set (or whether TCI states are configured for a specific control resource set), the UE can select one TCI state to use to receive the PDSCH.

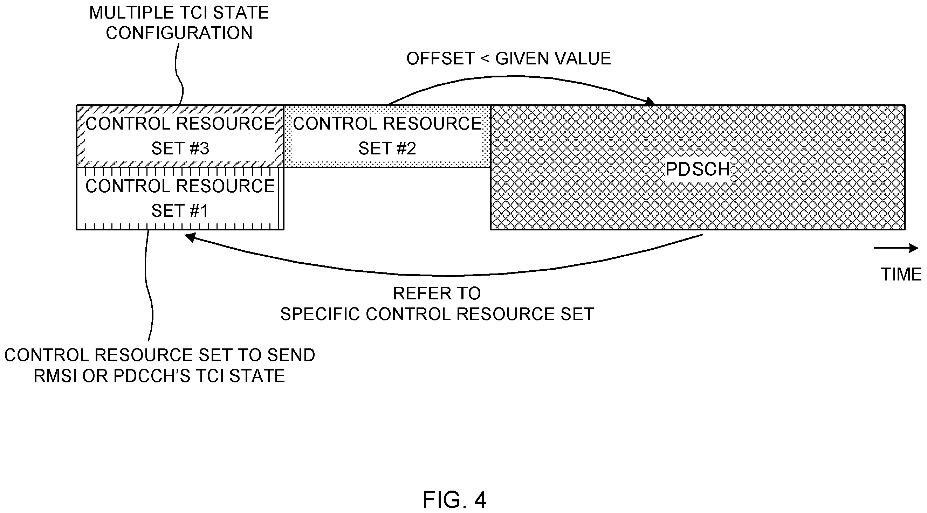

FIG. 4 shows a case in which, when the offset between the DCI that is transmitted in control resource set #2 and a PDSCH is less than a given value, the receipt of the PDSCH is controlled based on the TCI state of a specific control resource set.

Here, a case is shown in which control resource set #1 and control resource set #3 are configured in UE in a given slot (latest slot) before control resource set #2 in the time direction. Control resource set #1 and control resource set #3 may be configured in the same slot as or different slots from control resource set #2.

In addition, a case is shown here in which control resource set #1 and control resource set #3 are multiplexed in the frequency direction. Note that control resource set #1 and control resource set #3 may be multiplexed in the time direction. Note that the number of control resource sets and the allocation of control resource sets are not limited to the configuration shown in FIG. 4.

If the offset between the DCI of control resource set #2 and a PDSCH is less than a given value, the UE judges QCL based on the TCI state corresponding to a specific control resource set among the control resource sets configured for the UE in a given slot. In FIG. 4, the UE controls the receiving processes for the PDSCH based on the TCI state corresponding to control resource set #1 (used to report the PDCCH QCL of control resource set #1).

For example, the UE may assume that the TCI state of control resource set #1 is the TCI state for the control resource set for transmitting system information and/or the TCI state for the PDCCH that schedules system information. Note that the PDCCH for scheduling system information may be a given common search space (for example, type 0 common search space). That is, the UE controls the receiving processes for the PDSCH based on the TCI state used to receive system information.

Alternatively, the UE may assume that the DMRS port for PDSCH (for example, the antenna port of one DMRS port group) is quasi-co-located (QCL) with the synchronization signal block (SS block) determined in initial access procedures.

By this means, if the UE does not receive higher layer signaling for configuring TCI states, or even before the UE receives a command to activate TCI states (for example, MAC CE), the UE can control the receipt of the PDSCH on the assumption that the PDSCH DMRS port is quasi-co-located (QCL) with the SS block.

By this means, if the UE does not receive higher layer signaling for configuring TCI states, or even before the UE receives a command to activate TCI states (for example, MAC CE), the UE can control the receipt of the PDSCH on the assumption that the PDSCH DMRS port is quasi-co-located (QCL) with the SS block.

In this way, the TCI states for control resource sets for use for other applications and/or PDCCH (search space) are used a TCI state for a specific control resource sets, so that the TCI state to use for PDSCH receiving processes can be easily selected. By this means, regardless of which TCI state is configured in association with a specific control resource set (or whether TCI states are configured for a specific control resource set), the UE can select one TCI state to use to receive the PDSCH. By this means, the PDSCH receiving processes can be performed properly, so that it is possible to reduce the decline in communication throughput, communication quality and so forth.

### (Radio Communication System)

Now, the structure of a radio communication system according to the present embodiment will be described below. In this radio communication system, communication is performed using at least one of the above examples or a combination of these.

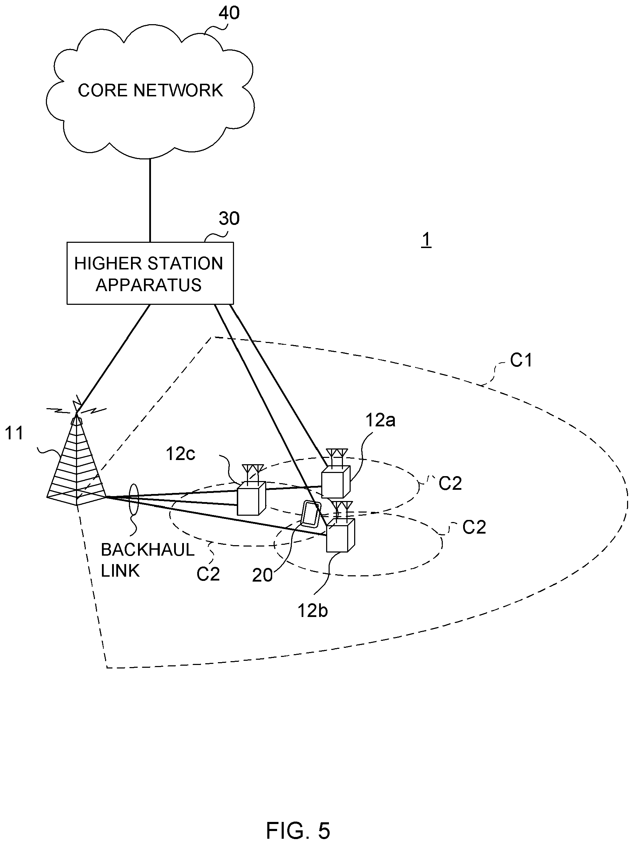

FIG. 5 is a diagram to show an exemplary schematic structure of a radio communication system according to the present embodiment. A radio communication system 1 can adopt carrier aggregation (CA) and/or dual connectivity (DC) to group a plurality of fundamental frequency blocks (component carriers) into 1, where the LTE system bandwidth (for example, 20 MHz) constitutes 1 unit.

Note that the radio communication system 1 may be referred to as "LTE (Long Term Evolution)," "LTE-A (LTE-Advanced)," "LTE-B (LTE-Beyond)," "SUPER 3G," "IMT-Advanced," "4G (4th generation mobile communication system)," "5G (5th generation mobile communication system)," "NR (New Radio)," "FRA (Future Radio Access)," "New-RAT (Radio Access Technology)," and so on, or may be seen as a system to implement these.

The radio communication system 1 includes a radio base station 11 that forms a macro cell C1, with a relatively wide coverage, and radio base stations 12a to 12c that are placed within the macro cell C1 and that form small cells C2, which are narrower than the macro cell C1. Also, user terminals 20 are placed in the macro cell C1 and in each small cell C2. The arrangement and number of cells and user terminals 20 are not limited to those illustrated in the drawing.

The user terminals 20 can connect with both the radio base station 11 and the radio base stations 12. The user terminals 20 may use the macro cell C1 and the small cells C2 at the same time by means of CA or DC. Furthermore, the user terminals 20 may apply CA or DC using a number of cells (CCs) (for example, five or fewer CCs or six or more CCs).

Between the user terminals 20 and the radio base station 11, communication can be carried out using a carrier of a relatively low frequency bandwidth (for example, 2 GHz) and a narrow bandwidth (referred to as, for example, an "existing carrier," a "legacy carrier" and so on). Meanwhile, between the user terminals 20 and the radio base stations 12, a carrier of a relatively high frequency bandwidth (for example, 3.5 GHz, 5 GHz and so on) and a wide bandwidth may be used, or the same carrier as that used in the radio base station 11 may be used. Note that the structure of the frequency bandwidth for use in each radio base station is by no means limited to these.

Furthermore, the user terminals 20 can communicate by using time division duplexing (TDD) and/or frequency division duplexing (FDD), in each cell. Furthermore, in each cell (carrier), a single numerology may be used, or a plurality of different numerologies may be used.

A numerology may refer to communication parameters that are applied to transmission and/or receipt of a given signal and/or channel, and represent at least one of the subcarrier spacing, the bandwidth, the duration of symbols, the length of cyclic prefixes, the duration of subframes, the length of TTIs, the number of symbols per TTI, the radio frame configuration, the filtering process, the windowing process and so on.

The radio base station 11 and a radio base station 12 (or 2 radio base stations 12) may be connected with each other by cables (for example, by optical fiber, which is in compliance with the CPRI (Common Public Radio Interface), the X2 interface and so on), or by radio.

The radio base station 11 and the radio base stations 12 are each connected with higher station apparatus 30, and are connected with a core network 40 via the higher station apparatus 30. Note that the higher station apparatus 30 may be, for example, access gateway apparatus, a radio network controller (RNC), a mobility management entity (MME) and so on, but is by no means limited to these. Also, each radio base station 12 may be connected with the higher station apparatus 30 via the radio base station 11.

Note that the radio base station 11 is a radio base station having a relatively wide coverage, and may be referred to as a "macro base station," a "central node," an "eNB (eNodeB)," a "transmitting/receiving point" and so on. Also, the radio base stations 12 are radio base stations having local coverages, and may be referred to as "small base stations," "micro base stations," "pico base stations," "femto base stations," "HeNBs (Home eNodeBs)," "RRHs (Remote Radio Heads)," "transmitting/receiving points" and so on. Hereinafter the radio base stations 11 and 12 will be collectively referred to as "radio base stations 10," unless specified otherwise.

The user terminals 20 are terminals to support various communication schemes such as LTE, LTE-A and so on, and may be either mobile communication terminals (mobile stations) or stationary communication terminals (fixed stations).

In the radio communication system 1, as radio access schemes, orthogonal frequency division multiple access (OFDMA) is applied to the downlink, and single-carrier frequency division multiple access (SC-FDMA) and/or OFDMA are applied to the uplink.

OFDMA is a multi-carrier communication scheme to perform communication by dividing a frequency bandwidth into a plurality of narrow frequency bandwidths (subcarriers) and mapping data to each subcarrier. SC-FDMA is a single-carrier communication scheme to mitigate interference between terminals by dividing the system bandwidth into bands formed with one or continuous resource blocks per terminal, and allowing a plurality of terminals to use mutually different bands. Note that the uplink and downlink radio access schemes are not limited to these combinations, and other radio access schemes may be used.

In the radio communication system 1, a downlink shared channel (PDSCH (Physical Downlink Shared CHannel)), which is used by each user terminal 20 on a shared basis, a broadcast channel (PBCH (Physical Broadcast CHannel)), downlink L1/L2 control channels and so on are used as downlink channels. User data, higher layer control information, SIBs (System Information Blocks) and so on are communicated in the PDSCH. Also, the MIB (Master Information Blocks) is communicated in the PBCH.

The L1/L2 control channels include at least one of DL control channels (such as PDCCH (Physical Downlink Control CHannel), and/or an EPDCCH (Enhanced Physical Downlink Control CHannel), etc.), a PCFICH (Physical Control Format Indicator CHannel), a PHICH (Physical Hybrid-ARQ Indicator CHannel) and so on. Downlink control information (DCI), which includes PDSCH and/or PUSCH scheduling information, is communicated by the PDCCH.

Note that scheduling information may be reported in DCI. For example, DCI to schedule receipt of DL data may be referred to as a "DL assignment," and DCI to schedule UL data transmission may also be referred to as a "UL grant."

The number of OFDM symbols to use for the PDCCH is communicated by the PCFICH. HARQ (Hybrid Automatic Repeat reQuest) delivery acknowledgment information (also referred to as, for example, "retransmission control information," "HARQ-ACKs," "ACK/NACKs," etc.) in response to the PUSCH is transmitted by the PHICH. The EPDCCH is frequency-division-multiplexed with the PDSCH (downlink shared data channel) and used to communicate DCI and so on, like the PDCCH.

In the radio communication system 1, an uplink shared channel (PUSCH (Physical Uplink Shared CHannel)), which is used by each user terminal 20 on a shared basis, an uplink control channel (PUCCH (Physical Uplink Control CHannel)), a random access channel (PRACH (Physical Random Access CHannel)) and so on are used as uplink channels. User data, higher layer control information and so on are communicated by the PUSCH. Also, in the PUCCH, downlink radio quality information (CQI (Channel Quality Indicator)), delivery acknowledgment information, scheduling requests (SRs) and so on are communicated. By means of the PRACH, random access preambles for establishing connections with cells are communicated.

In the radio communication systems 1, the cell-specific reference signal (CRS (Cell-specific Reference Signal)), the channel state information reference signal (CSI-RS (Channel State Information-Reference Signal)), the demodulation reference signal (DMRS (DeModulation Reference Signal)), the positioning reference signal (PRS (Positioning Reference Signal)) and so on are communicated as downlink reference signals. Also, in the radio communication system 1, the measurement reference signal (SRS (Sounding Reference Signal)), the demodulation reference signal (DMRS) and so on are communicated as uplink reference signals. Note that the DMRS may be referred to as a "user terminal-specific reference signal (UE-specific Reference Signal)." Also, the reference signals to be communicated are by no means limited to these.

### (Radio Base Station)

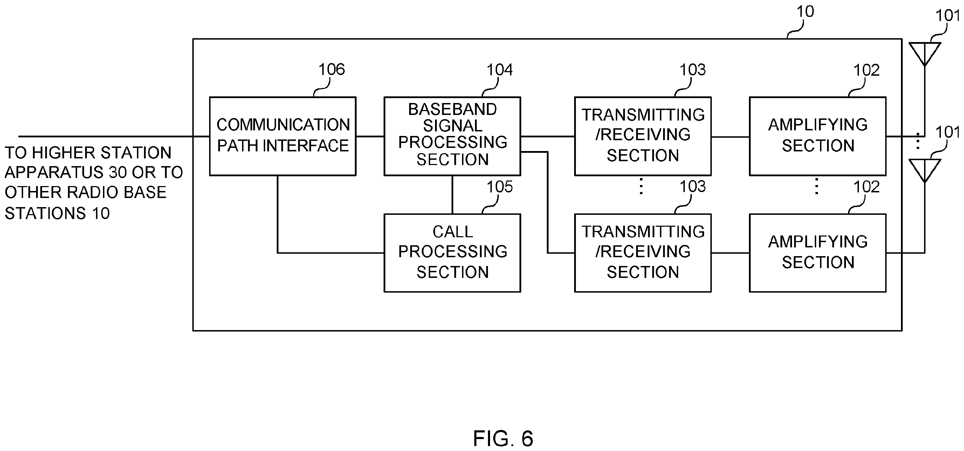

FIG. 6 is a diagram to show an exemplary overall structure of a radio base station according to the present embodiment. A radio base station 10 has a plurality of transmitting/receiving antennas 101, amplifying sections 102, transmitting/receiving sections 103, a baseband signal processing section 104, a call processing section 105 and a communication path interface 106. Note that one or more transmitting/receiving antennas 101, amplifying sections 102 and transmitting/receiving sections 103 may be provided.

User data to be transmitted from the radio base station 10 to a user terminal 20 on the downlink is input from the higher station apparatus 30 to the baseband signal processing section 104, via the communication path interface 106.

In the baseband signal processing section 104, the user data is subjected to transmission processes, including a PDCP (Packet Data Convergence Protocol) layer process, user data division and coupling, RLC (Radio Link Control) layer transmission processes such as RLC retransmission control, MAC (Medium Access Control) retransmission control (for example, an HARQ (Hybrid Automatic Repeat reQuest) transmission process), scheduling, transport format selection, channel coding, an inverse fast Fourier transform (IFFT) process and a precoding process, and the result is forwarded to each transmitting/receiving section 103. Furthermore, downlink control signals are also subjected to transmission processes such as channel coding and an inverse fast Fourier transform, and forwarded to each transmitting/receiving section 103.

Baseband signals that are precoded and output from the baseband signal processing section 104 on a per antenna basis are converted into a radio frequency band in the transmitting/receiving sections 103, and then transmitted. The radio frequency signals having been subjected to frequency conversion in the transmitting/receiving sections 103 are amplified in the amplifying sections 102, and transmitted from the transmitting/receiving antennas 101. The transmitting/receiving sections 103 can be constituted by transmitters/receivers, transmitting/receiving circuits or transmitting/receiving apparatus that can be described based on general understanding of the technical field to which this disclosure pertains. Note that a transmitting/receiving section 103 may be structured as a transmitting/receiving section in one entity, or may be constituted by a transmitting section and a receiving section.

Meanwhile, as for uplink signals, radio frequency signals that are received in the transmitting/receiving antennas 101 are each amplified in the amplifying sections 102. The transmitting/receiving sections 103 receive the uplink signals amplified in the amplifying sections 102. The received signals are converted into the baseband signal through frequency conversion in the transmitting/receiving sections 103 and output to the baseband signal processing section 104.

In the baseband signal processing section 104, user data that is included in the uplink signals that are input is subjected to a fast Fourier transform (FFT) process, an inverse discrete Fourier transform (IDFT) process, error correction decoding, a MAC retransmission control receiving process, and RLC layer and PDCP layer receiving processes, and forwarded to the higher station apparatus 30 via the communication path interface 106. The call processing section 105 performs call processing (such as setting up and releasing communication channels), manages the state of the radio base stations 10 and manages the radio resources.

The communication path interface section 106 transmits and receives signals to and from the higher station apparatus 30 via a given interface. Also, the communication path interface 106 may transmit and receive signals (backhaul signaling) with other radio base stations 10 via an inter-base station interface (which is, for example, optical fiber that is in compliance with the CPRI (Common Public Radio Interface), the X2 interface, etc.).

Note that the transmitting/receiving sections 103 may furthermore have an analog beamforming section that forms analog beams. The analog beamforming section may be constituted by an analog beamforming circuit (for example, a phase shifter, a phase shifting circuit, etc.) or analog beamforming apparatus (for example, a phase shifting device) that can be described based on general understanding of the technical field to which the present invention pertains. Furthermore, the transmitting/receiving antennas 101 may be constituted by, for example, array antennas. Also, the transmitting/receiving sections 103 are configured to be able to adopt single-BF and multi-BF.

The transmitting/receiving sections 103 may transmit signals using transmitting beams, or receive signals using receiving beams. The transmitting/receiving sections 103 may transmit and/or receive signals using given beams determined by the control section 301.

The transmitting/receiving sections 103 may receive various pieces of information described in each example above from the user terminal 20, or transmit these to the user terminal 20. For example, the transmitting/receiving sections 103 transmit information to represent the configuration of DL-RS resources for measurement (for example, CSI-RS resources and/or SS/PBCH blocks). Also, the transmitting/receiving sections 103 transmit information related to TCI states (for example, QCL).

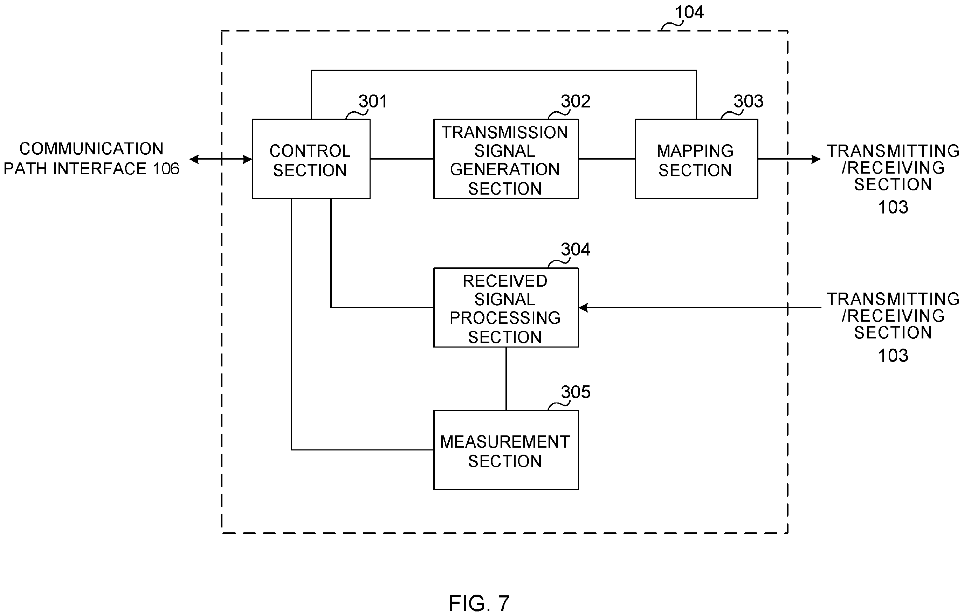

FIG. 7 is a diagram to show an exemplary functional structure of a radio base station according to the present embodiment. Note that, although this example primarily shows functional blocks that pertain to characteristic parts of present embodiment, the radio base station 10 has other functional blocks that are necessary for radio communication as well.

The baseband signal processing section 104 at least has a control section (scheduler) 301, a transmission signal generation section 302, a mapping section 303, a received signal processing section 304 and a measurement section 305. Note that these configurations have only to be included in the radio base station 10, and some or all of these configurations may not be included in the baseband signal processing section 104.

The control section (scheduler) 301 controls the whole of the radio base station 10. The control section 301 can be constituted by a controller, a control circuit or control apparatus that can be described based on general understanding of the technical field to which this disclosure pertains.

The control section 301 controls, for example, generation of signals in the transmission signal generation section 302, allocation of signals in the mapping section 303, and so on. Furthermore, the control section 301 controls signal receiving processes in the received signal processing section 304, measurements of signals in the measurement section 305, and so on.

The control section 301 controls the scheduling (for example, resource allocation) of system information, downlink data signals (for example, signals transmitted in the PDSCH) and downlink control signals (for example, signals transmitted in the PDCCH and/or the EPDCCH, such as delivery acknowledgment information). The control section 301 controls the generation of downlink control signals, downlink data signals and so on, based on the results of deciding whether or not retransmission control is necessary for uplink data signals, and so on.

The control section 301 controls scheduling of synchronization signals (for example, PSS/SSS), downlink reference signals (for example, CRS, CSI-RS, DMRS, etc.) and the like.

The control section 301 may exert control so that transmitting beams and/or receiving beams are formed by using digital BF (for example, precoding) in the baseband signal processing section 104 and/or analog BF (for example, phase rotation) in the transmitting/receiving sections 103.

The control section 301 exerts control so that one TCI state is configured in association with a specific control resource set.

The transmission signal generation section 302 generates downlink signals (downlink control signals, downlink data signals, downlink reference signals and so on) based on commands from the control section 301, and outputs these signals to the mapping section 303. The transmission signal generation section 302 can be constituted by a signal generator, a signal generating circuit or signal generating apparatus that can be described based on general understanding of the technical field to which this disclosure pertains.

For example, the transmission signal generation section 302 generates DL assignments, which report downlink data allocation information, and/or UL grants, which report uplink data allocation information, based on commands from the control section 301. DL assignments and UL grants are both DCI, in compliance with DCI format. Also, the downlink data signals are subjected to the coding process, the modulation process and so on, by using coding rates and modulation schemes that are determined based on, for example, channel state information (CSI) from each user terminal 20.

The mapping section 303 maps the downlink signals generated in the transmission signal generation section 302 to given radio resources based on commands from the control section 301, and outputs these to the transmitting/receiving sections 103. The mapping section 303 can be constituted by a mapper, a mapping circuit or mapping apparatus that can be described based on general understanding of the technical field to which this disclosure pertains.

The received signal processing section 304 performs receiving processes (for example, demapping, demodulation, decoding and so on) of received signals that are input from the transmitting/receiving sections 103. Here, the received signals include, for example, uplink signals transmitted from the user terminals 20 (uplink control signals, uplink data signals, uplink reference signals and so on). For the received signal processing section 304, a signal processor, a signal processing circuit or signal processing apparatus that can be described based on general understanding of the technical field to which this disclosure pertains can be used.

The received signal processing section 304 outputs the decoded information acquired through the receiving processes, to the control section 301. For example, when a PUCCH to contain an HARQ-ACK is received, the received signal processing section 304 outputs this HARQ-ACK to the control section 301. Also, the received signal processing section 304 outputs the received signals and/or the signals after the receiving processes to the measurement section 305.

The measurement section 305 conducts measurements with respect to the received signals. The measurement section 305 can be constituted by a measurer, a measurement circuit or measurement apparatus that can be described based on general understanding of the technical field to which this disclosure pertains.

For example, the measurement section 305 may perform RRM (Radio Resource Management) measurements, CSI (Channel State Information) measurements and so on, based on the received signals. The measurement section 305 may measure the received power (for example, RSRP (Reference Signal Received Power)), the received quality (for example, RSRQ (Reference Signal Received Quality), SINR (Signal to Interference plus Noise Ratio), etc.), SNR (Signal to Noise Ratio), the signal strength (for example, RSSI (Received Signal Strength Indicator)), transmission path information (for example, CSI) and so on. The measurement results may be output to the control section 301.

### (User Terminal)

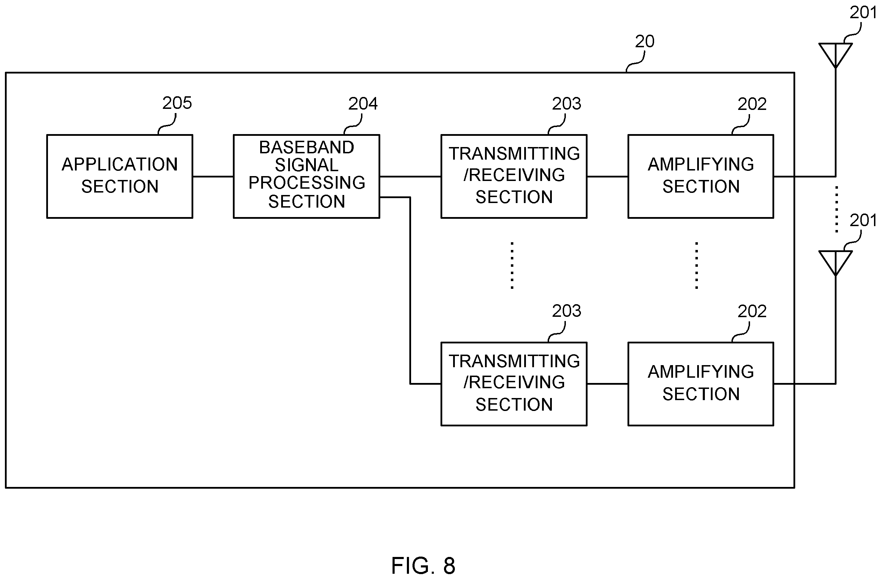

FIG. 8 is a diagram to show an exemplary overall structure of a user terminal according to the present embodiment. A user terminal 20 has a plurality of transmitting/receiving antennas 201, amplifying sections 202, transmitting/receiving sections 203, a baseband signal processing section 204 and an application section 205. Note that one or more transmitting/receiving antennas 201, amplifying sections 202 and transmitting/receiving sections 203 may be provided.

Radio frequency signals that are received in the transmitting/receiving antennas 201 are amplified in the amplifying sections 202. The transmitting/receiving sections 203 receive the downlink signals amplified in the amplifying sections 202. The received signals are subjected to frequency conversion and converted into the baseband signal in the transmitting/receiving sections 203, and output to the baseband signal processing section 204. A transmitting/receiving section 203 can be constituted by a transmitters/receiver, a transmitting/receiving circuit or transmitting/receiving apparatus that can be described based on general understanding of the technical field to which this disclosure pertains. Note that a transmitting/receiving section 203 may be structured as a transmitting/receiving section in one entity, or may be constituted by a transmitting section and a receiving section.

The baseband signal processing section 204 performs, for the baseband signal that is input, an FFT process, error correction decoding, a retransmission control receiving process and so on. Downlink user data is forwarded to the application section 205. The application section 205 performs processes related to higher layers above the physical layer and the MAC layer, and so on. Also, in the downlink data, the broadcast information can be also forwarded to the application section 205.

Meanwhile, uplink user data is input from the application section 205 to the baseband signal processing section 204. The baseband signal processing section 204 performs a retransmission control transmission process (for example, an HARQ transmission process), channel coding, precoding, a discrete Fourier transform (DFT) process, an IFFT process and so on, and the result is forwarded to the transmitting/receiving sections 203.

Baseband signals that are output from the baseband signal processing section 204 are converted into a radio frequency band in the transmitting/receiving sections 203 and transmitted. The radio frequency signals that are subjected to frequency conversion in the transmitting/receiving sections 203 are amplified in the amplifying sections 202, and transmitted from the transmitting/receiving antennas 201.

Note that the transmitting/receiving sections 203 may furthermore have an analog beamforming section that forms analog beams. The analog beamforming section may be constituted by an analog beamforming circuit (for example, a phase shifter, a phase shifting circuit, etc.) or analog beamforming apparatus (for example, a phase shifting device) that can be described based on general understanding of the technical field to which the present invention pertains. Furthermore, the transmitting/receiving antennas 201 may be constituted by, for example, array antennas. Also, the transmitting/receiving sections 203 are configured to be able to adopt single-BF and multi-BF.

The transmitting/receiving sections 203 may transmit signals using transmitting beams, or receive signals using receiving beams. The transmitting/receiving sections 203 may transmit and/or receive signals using given beams determined by the control section 401.

The transmitting/receiving sections 203 may receive various pieces of information described in each example above from the user terminal 20, or transmit these to the user terminal 20. For example, the transmitting/receiving sections 203 receive information to represent the configuration of DL-RS resources for measurement (for example, CSI-RS resources and/or SS/PBCH blocks). Also, the transmitting/receiving sections 203 receive information related to TCI states (for example, QCL).

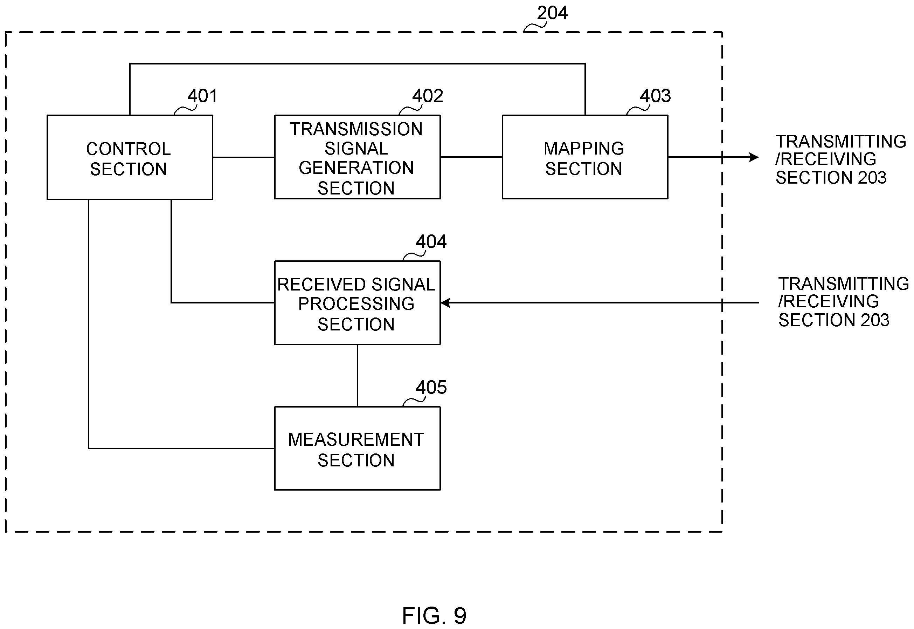

FIG. 9 is a diagram to show an exemplary functional structure of a user terminal according to the present embodiment. Note that, although this example primarily shows functional blocks that pertain to characteristic parts of present embodiment, the user terminal 20 has other functional blocks that are necessary for radio communication as well.

The baseband signal processing section 204 provided in the user terminal 20 at least has a control section 401, a transmission signal generation section 402, a mapping section 403, a received signal processing section 404 and a measurement section 405. Note that these configurations have only to be included in the user terminal 20, and some or all of these configurations may not be included in the baseband signal processing section 204.

The control section 401 controls the whole of the user terminal 20. For the control section 401, a controller, a control circuit or control apparatus that can be described based on general understanding of the technical field to which this disclosure pertains can be used.

The control section 401 controls, for example, generation of signals in the transmission signal generation section 402, allocation of signals in the mapping section 403, and so on. Furthermore, the control section 401 controls signal receiving processes in the received signal processing section 404, measurements of signals in the measurement section 405, and so on.

The control section 401 acquires the downlink control signals and downlink data signals transmitted from the radio base station 10, via the received signal processing section 404. The control section 401 controls the generation of uplink control signals and/or uplink data signals based on the results of deciding whether or not retransmission control is necessary for the downlink control signals and/or downlink data signals, and so on.

The control section 401 may exert control so that transmitting beams and/or receiving beams are formed using digital BF (for example, precoding) in the baseband signal processing section 204 and/or analog BF (for example, phase rotation) in the transmitting/receiving sections 203.

When the offset between DCI and the PDSCH corresponding to that DCI is less than a given value, the control section 401 controls the receipt of the PDSCH based on one TCI state that corresponds to a specific control resource set. For example, the control section 401 may assume that 1 specific TCI state is configured for a specific control resource set.

Alternatively, the control section 401 may control the receipt of a PDSCH by using a TCI state selected based on a given condition, among a number of TCI states configured in advance in association with a specific control resource set (second example).

Alternatively, the control section 401 may assume that the TCI state corresponding to a specific control resource set is at least one of the TCI state that is applied to the control resource set for transmitting system information and the TCI state applied to PDCCH-scheduling system information (third example). Also, the control section 401 may control the receipt of a PDSCH on the assumption that the PDSCH is quasi-co-located (QCL) with a synchronization signal block (SS block) that is selected in initial access procedures.

The transmission signal generation section 402 generates uplink signals (uplink control signals, uplink data signals, uplink reference signals and so on) based on commands from the control section 401, and outputs these signals to the mapping section 403. The transmission signal generation section 402 can be constituted by a signal generator, a signal generating circuit or signal generation apparatus that can be described based on general understanding of the technical field to which this disclosure pertains.

For example, the transmission signal generation section 402 generates uplink control signals related to delivery acknowledgement information, channel state information (CSI) and so on, based on commands from the control section 401. Also, the transmission signal generation section 402 generates uplink data signals based on commands from the control section 401. For example, when a UL grant is included in a downlink control signal that is reported from the radio base station 10, the control section 401 commands the transmission signal generation section 402 to generate an uplink data signal.

The mapping section 403 maps the uplink signals generated in the transmission signal generation section 402 to radio resources based on commands from the control section 401, and outputs the result to the transmitting/receiving sections 203. The mapping section 403 can be constituted by a mapper, a mapping circuit or mapping apparatus that can be described based on general understanding of the technical field to which this disclosure pertains.

The received signal processing section 404 performs receiving processes (for example, demapping, demodulation, decoding and so on) of received signals that are input from the transmitting/receiving sections 203. Here, the received signals include, for example, downlink signals (downlink control signals, downlink data signals, downlink reference signals and so on) that are transmitted from the radio base station 10. The received signal processing section 404 can be constituted by a signal processor, a signal processing circuit or signal processing apparatus that can be described based on general understanding of the technical field to which this disclosure pertains. Also, the received signal processing section 404 can constitute the receiving section according to this disclosure.

The received signal processing section 404 outputs the decoded information acquired through the receiving processes, to the control section 401. The received signal processing section 404 outputs, for example, broadcast information, system information, RRC signaling, DCI and so on, to the control section 401. Also, the received signal processing section 404 outputs the received signals and/or the signals after the receiving processes to the measurement section 405.

The measurement section 405 conducts measurements with respect to the received signals. The measurement section 405 can be constituted by a measurer, a measurement circuit or measurement apparatus that can be described based on general understanding of the technical field to which this disclosure pertains.

For example, the measurement section 405 may perform RRM measurements, CSI measurements and so on based on the received signals. The measurement section 405 may measure the received power (for example, RSRP), the received quality (for example, RSRQ, SINR, SNR, etc.), the signal strength (for example, RSSI), transmission path information (for example, CSI) and so on. The measurement results may be output to the control section 401.

### (Hardware Structure)

Note that the block diagrams that have been used to describe the present embodiment show blocks in functional units. These functional blocks (components) may be implemented in arbitrary combinations of hardware and/or software. Also, the method for implementing each functional block is not particularly limited. That is, each functional block may be realized by 1 piece of apparatus that is physically and/or logically aggregated, or may be realized by directly and/or indirectly connecting two or more physically and/or logically separate pieces of apparatus (via wire or wireless, for example) and using these multiple pieces of apparatus.

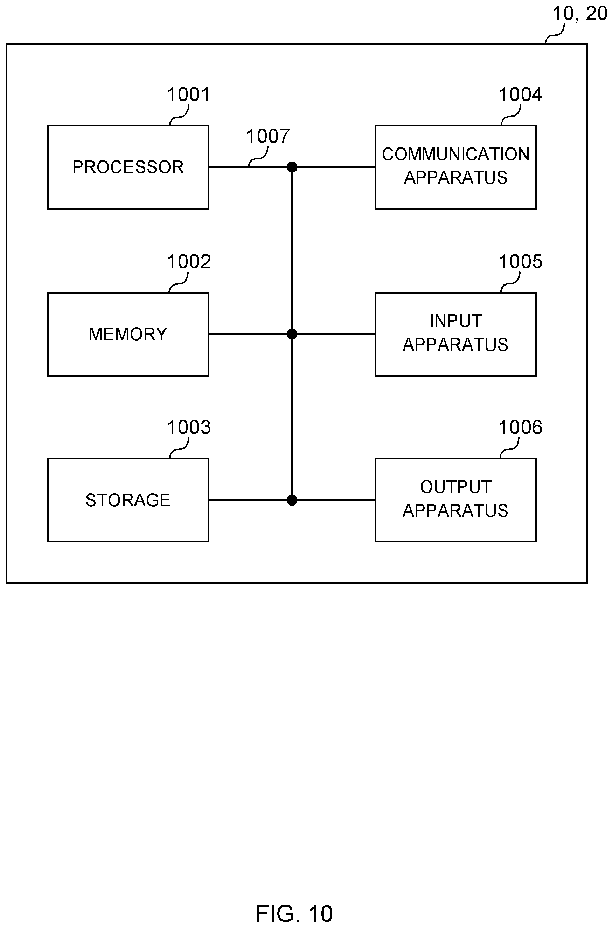

For example, the radio base station, user terminals and so on according to the present embodiment may function as a computer that executes the processes of each example of the present embodiment. FIG. 10 is a diagram to show an exemplary hardware structure of a radio base station and a user terminal according to the present embodiment. Physically, the above-described radio base stations 10 and user terminals 20 may be formed as a computer apparatus that includes a processor 1001, a memory 1002, a storage 1003, communication apparatus 1004, input apparatus 1005, output apparatus 1006 and a bus 1007.

Note that, in the following description, the word "apparatus" may be replaced by "circuit," "device," "unit" and so on. Note that the hardware structure of a radio base station 10 and a user terminal 20 may be designed to include one or more of each apparatus shown in the drawings, or may be designed not to include part of the apparatus.

For example, although only 1 processor 1001 is shown, a plurality of processors may be provided. Furthermore, processes may be implemented with 1 processor, or processes may be implemented in sequence, or in different manners, on one or more processors. Note that the processor 1001 may be implemented with one or more chips.

The functions of the radio base station 10 and the user terminal 20 are implemented by allowing hardware such as the processor 1001 and the memory 1002 to read given software (programs), thereby allowing the processor 1001 to do calculations, the communication apparatus 1004 to communicate, and the memory 1002 and the storage 1003 to read and/or write data.

The processor 1001 may control the whole computer by, for example, running an operating system. The processor 1001 may be configured with a central processing unit (CPU), which includes interfaces with peripheral apparatus, control apparatus, computing apparatus, a register and so on. For example, the above-described baseband signal processing section 104 (204), call processing section 105 and so on may be implemented by the processor 1001.

Furthermore, the processor 1001 reads programs (program codes), software modules, data and so forth from the storage 1003 and/or the communication apparatus 1004, into the memory 1002, and executes various processes according to these. As for the programs, programs to allow computers to execute at least part of the operations of the above-described embodiments may be used. For example, the control section 401 of the user terminals 20 may be implemented by control programs that are stored in the memory 1002 and that operate on the processor 1001, and other functional blocks may be implemented likewise.

The memory 1002 is a computer-readable recording medium, and may be constituted by, for example, at least one of a ROM (Read Only Memory), an EPROM (Erasable Programmable ROM), an EEPROM (Electrically EPROM), a RAM (Random Access Memory) and/or other appropriate storage media. The memory 1002 may be referred to as a "register," a "cache," a "main memory" (primary storage apparatus) and so on. The memory 1002 can store executable programs (program codes), software modules and so on for implementing the radio communication methods according to the present embodiment.

The storage 1003 is a computer-readable recording medium, and may be constituted by, for example, at least one of a flexible disk, a floppy (registered trademark) disk, a magneto-optical disk (for example, a compact disc (CD-ROM (Compact Disc ROM) and so on), a digital versatile disc, a Blu-ray (registered trademark) disk), a removable disk, a hard disk drive, a smart card, a flash memory device (for example, a card, a stick, a key drive, etc.), a magnetic stripe, a database, a server, and/or other appropriate storage media. The storage 1003 may be referred to as "secondary storage apparatus."

The communication apparatus 1004 is hardware (transmitting/receiving device) for allowing inter-computer communication by using wired and/or wireless networks, and may be referred to as, for example, a "network device," a "network controller," a "network card," a "communication module" and so on. The communication apparatus 1004 may be configured to include a high frequency switch, a duplexer, a filter, a frequency synthesizer and so on in order to realize, for example, frequency division duplex (FDD) and/or time division duplex (TDD). For example, the above-described transmitting/receiving antennas 101 (201), amplifying sections 102 (202), transmitting/receiving sections 103 (203), communication path interface 106 and so on may be implemented by the communication apparatus 1004.

The input apparatus 1005 is an input device for receiving input from the outside (for example, a keyboard, a mouse, a microphone, a switch, a button, a sensor and so on). The output apparatus 1006 is an output device for allowing sending output to the outside (for example, a display, a speaker, an LED (Light Emitting Diode) lamp and so on). Note that the input apparatus 1005 and the output apparatus 1006 may be provided in an integrated structure (for example, a touch panel).

Furthermore, these pieces of apparatus, including the processor 1001, the memory 1002 and so on are connected by the bus 1007 so as to communicate information. The bus 1007 may be formed with a single bus, or may be formed with buses that vary between pieces of apparatus.

Also, the radio base station 10 and the user terminal 20 may be structured to include hardware such as a microprocessor, a digital signal processor (DSP), an ASIC (Application-Specific Integrated Circuit), a PLD (Programmable Logic Device), an FPGA (Field Programmable Gate Array) and so on, and part or all of the functional blocks may be implemented by the hardware. For example, the processor 1001 may be implemented with at least one of these pieces of hardware.

### (Variations)

Note that the terminology used in this specification and the terminology that is needed to understand this specification may be replaced by other terms that convey the same or similar meanings. For example, "channels" and/or "symbols" may be replaced by "signals" (or "signaling"). Also, "signals" may be "messages." A reference signal may be abbreviated as an "RS," and may be referred to as a "pilot," a "pilot signal" and so on, depending on which standard applies. Furthermore, a "component carrier (CC)" may be referred to as a "cell," a "frequency carrier," a "carrier frequency" and so on.

Furthermore, a radio frame may be comprised of one or more periods (frames) in the time domain. Each of one or more periods (frames) constituting a radio frame may be referred to as a "subframe." Furthermore, a subframe may be comprised of one or multiple slots in the time domain. A subframe may be a fixed time duration (for example, 1 ms) not dependent on the numerology.

Furthermore, a slot may be comprised of one or more symbols in the time domain (OFDM (Orthogonal Frequency Division Multiplexing) symbols, SC-FDMA (Single Carrier Frequency Division Multiple Access) symbols, and so on). Also, a slot may be a time unit based on numerology. Also, a slot may include a plurality of mini-slots. Each mini-slot may be comprised of one or more symbols in the time domain. Also, a mini-slot may be referred to as a "subslot."

A radio frame, a subframe, a slot, a mini-slot and a symbol all represent the time unit in signal communication. A radio frame, a subframe, a slot, a mini-slot and a symbol may be each called by other applicable names. For example, 1 subframe may be referred to as a "transmission time interval (TTI)," or a plurality of consecutive subframes may be referred to as a "TTI," or 1 slot or mini-slot may be referred to as a "TTI." That is, a subframe and/or a TTI may be a subframe (1 ms) in existing LTE, may be a shorter period than 1 ms (for example, 1 to 13 symbols), or may be a longer period of time than 1 ms. Note that the unit to represent the TTI may be referred to as a "slot," a "mini slot" and so on, instead of a "subframe."

Here, a TTI refers to the minimum time unit of scheduling in radio communication, for example. For example, in LTE systems, a radio base station schedules the radio resources (such as the frequency bandwidth and transmission power that can be used in each user terminal) to allocate to each user terminal in TTI units. Note that the definition of TTIs is not limited to this.

The TTI may be the transmission time unit of channel-encoded data packets (transport blocks), code blocks and/or codewords, or may be the unit of processing in scheduling, link adaptation and so on. Note that when a TTI is given, the time interval (for example, the number of symbols) in which transport blocks, code blocks and/or codewords are actually mapped may be shorter than the TTI.

Note that, when 1 slot or 1 mini-slot is referred to as a "TTI," one or more TTIs (that is, one or more slots or one or more mini-slots) may be the minimum time unit of scheduling. Also, the number of slots (the number of mini-slots) to constitute this minimum time unit of scheduling may be controlled.

A TTI having a time duration of 1 ms may be referred to as a "normal TTI (TTI in LTE Rel. 8 to 12)," a "long TTI," a "normal subframe," a "long subframe," and so on. A TTI that is shorter than a normal TTI may be referred to as a "shortened TTI," a "short TTI," a "partial TTI" (or a "fractional TTI"), a "shortened subframe," a "short subframe," a "minislot," "a sub-slot" and so on.

Note that a long TTI (for example, a normal TTI, a subframe, etc.) may be replaced with a TTI having a time duration exceeding 1 ms, and a short TTI (for example, a shortened TTI) may be replaced with a TTI having a TTI length less than the TTI length of a long TTI and not less than 1 ms.

A resource block (RB) is the unit of resource allocation in the time domain and the frequency domain, and may include one or a plurality of consecutive subcarriers in the frequency domain. Also, an RB may include one or more symbols in the time domain, and may be 1 slot, 1 mini-slot, 1 subframe or 1 TTI in length. 1 TTI and 1 subframe each may be comprised of one or more resource blocks. Note that one or more RBs may be referred to as a "physical resource block (PRB (Physical RB))," a "subcarrier group (SCG)," a "resource element group (REG)," a "PRB pair," an "RB pair" and so on.

Furthermore, a resource block may be comprised of one or more resource elements (REs). For example, 1 RE may be a radio resource field of 1 subcarrier and 1 symbol.

Note that the structures of radio frames, subframes, slots, mini-slots, symbols and so on described above are merely examples. For example, configurations pertaining to the number of subframes included in a radio frame, the number of slots included in a subframe or a radio frame, the number of mini-slots included in a slot, the number of RBs included in a slot or a mini-slot, the number of subcarriers included in an RB, the number of symbols in a TTI, the duration of symbols, the duration of cyclic prefixes (CPs) and so on can be changed in a variety of ways.

Also, the information and parameters described in this specification may be represented in absolute values or in relative values with respect to given values, or may be represented using other applicable information. For example, a radio resource may be specified by a given index.

The names used for parameters and so on in this specification are in no respect limiting. For example, since various channels (PUCCH (Physical Uplink Control CHannel), PDCCH (Physical Downlink Control CHannel) and so on) and information elements can be identified by any suitable names, the various names assigned to these individual channels and information elements are in no respect limiting.

The information, signals and/or others described in this specification may be represented by using a variety of different technologies. For example, data, instructions, commands, information, signals, bits, symbols and chips, all of which may be referenced throughout the herein-contained description, may be represented by voltages, currents, electromagnetic waves, magnetic fields or particles, optical fields or photons, or any combination of these.

Also, information, signals and so on can be output from higher layers to lower layers and/or from lower layers to higher layers. Information, signals and so on may be input and/or output via a plurality of network nodes.

The information, signals and so on that are input and/or output may be stored in a specific location (for example, in a memory), or may be managed in a control table. The information, signals and so on to be input and/or output can be overwritten, updated or appended. The information, signals and so on that are output may be deleted. The information, signals and so on that are input may be transmitted to other pieces of apparatus.

Reporting of information is by no means limited to the examples/embodiments described in this specification, and other methods may be used as well. For example, reporting of information may be implemented by using physical layer signaling (for example, downlink control information (DCI), uplink control information (UCI), higher layer signaling (for example, RRC (Radio Resource Control) signaling, broadcast information (the master information block (MIB), system information blocks (SIBs) and so on), MAC (Medium Access Control) signaling and so on), and other signals and/or combinations of these.

Note that physical layer signaling may be referred to as "L1/L2 (Layer 1/Layer 2) control information (L1/L2 control signals)," "L1 control information (L1 control signal)" and so on. Also, RRC signaling may be referred to as "RRC messages," and can be, for example, an RRC connection setup message, RRC connection reconfiguration message, and so on. Also, MAC signaling may be reported using, for example, MAC control elements (MAC CEs (Control Elements)).

Also, reporting of given information (for example, reporting of information to the effect that "X holds") does not necessarily have to be sent explicitly, and can be sent in an implicit way (for example, by not reporting this piece of information, by reporting another piece of information, and so on).

Decisions may be made in values represented by 1 bit (0 or 1), may be made in Boolean values that represent true or false, or may be made by comparing numerical values (for example, comparison against a given value).

Software, whether referred to as "software," "firmware," "middleware," "microcode" or "hardware description language," or called by other names, should be interpreted broadly, to mean instructions, instruction sets, code, code segments, program codes, programs, subprograms, software modules, applications, software applications, software packages, routines, subroutines, objects, executable files, execution threads, procedures, functions and so on.

Also, software, commands, information and so on may be transmitted and received via communication media. For example, when software is transmitted from a website, a server or other remote sources by using wired technologies (coaxial cables, optical fiber cables, twisted-pair cables, digital subscriber lines (DSL) and so on) and/or wireless technologies (infrared radiation, microwaves and so on), these wired technologies and/or wireless technologies are also included in the definition of communication media.

The terms "system" and "network" as used herein are used interchangeably.

As used herein, the terms "base station (BS)," "radio base station," "eNB," "gNB," "cell," "sector," "cell group," "carrier," and "component carrier" may be used interchangeably. A base station may be referred to as a "fixed station," "NodeB," "eNodeB (eNB)," "access point," "transmission point," "receiving point," "femto cell," "small cell" and so on.

A base station can accommodate one or more (for example, 3) cells (also referred to as "sectors"). When a base station accommodates a plurality of cells, the entire coverage area of the base station can be partitioned into multiple smaller areas, and each smaller area can provide communication services through base station subsystems (for example, indoor small base stations (RRHs (Remote Radio Heads))). The term "cell" or "sector" refers to part or all of the coverage area of a base station and/or a base station subsystem that provides communication services within this coverage.

As used herein, the terms "mobile station (MS)" "user terminal," "user equipment (UE)" and "terminal" may be used interchangeably.

A mobile station may be referred to, by a person skilled in the art, as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client" or some other suitable terms.

Furthermore, the radio base stations in this specification may be interpreted as user terminals. For example, each example/embodiment of this disclosure may be applied to a configuration in which communication between a radio base station and a user terminal is replaced with communication among a plurality of user terminals (D2D (Device-to-Device)). In this case, user terminals 20 may have the functions of the radio base stations 10 described above. In addition, terms such as "uplink" and "downlink" may be interpreted as "side." For example, an uplink channel may be interpreted as a side channel.

Likewise, the user terminals in this specification may be interpreted as radio base stations. In this case, the radio base stations 10 may have the functions of the user terminals 20 described above.

Certain actions which have been described in this specification to be performed by base stations may, in some cases, be performed by their upper nodes. In a network comprised of one or more network nodes with base stations, it is clear that various operations that are performed so as to communicate with terminals can be performed by base stations, one or more network nodes (for example, MMEs (Mobility Management Entities), S-GWs (Serving-Gateways) and so on may be possible, but these are not limiting) other than base stations, or combinations of these.

The examples/embodiments illustrated in this specification may be used individually or in combinations, which may be switched depending on the mode of implementation. The order of processes, sequences, flowcharts and so on that have been used to describe the examples/embodiments herein may be re-ordered as long as inconsistencies do not arise. For example, although various methods have been illustrated in this specification with various components of steps in exemplary orders, the specific orders that are illustrated herein are by no means limiting.

The examples/embodiments illustrated in this specification may be applied to systems that use LTE (Long Term Evolution), LTE-A (LTE-Advanced), LTE-B (LTE-Beyond), SUPER 3G, IMT-Advanced, 4G (4th generation mobile communication system), 5G (5th generation mobile communication system), FRA (Future Radio Access), New-RAT (Radio Access Technology), NR (New Radio), NX (New radio access), FX (Future generation radio access), GSM (registered trademark) (Global System for Mobile communications), CDMA 2000, UMB (Ultra Mobile Broadband), IEEE 802.11 (Wi-Fi (registered trademark)), IEEE 802.16 (WiMAX (registered trademark)), IEEE 802.20, UWB (Ultra-WideBand), Bluetooth (registered trademark) and other adequate radio communication methods, and/or next-generation systems that are enhanced based on these.

The phrase "based on" as used in this specification does not mean "based only on," unless otherwise specified. In other words, the phrase "based on" means both "based only on" and "based at least on."

Reference to elements with designations such as "first," "second" and so on as used herein does not generally limit the number/quantity or order of these elements. These designations are used herein only for convenience, as a method for distinguishing between two or more elements. In this way, reference to the first and second elements does not imply that only 2 elements may be employed, or that the first element must precede the second element in some way.

The terms "judge" and "determine" as used herein may encompass a wide variety of actions. For example, to "judge" and "determine" as used herein may be interpreted to mean making judgements and determinations related to calculating, computing, processing, deriving, investigating, looking up (for example, searching a table, a database or some other data structure), ascertaining and so on. Furthermore, to "judge" and "determine" as used herein may be interpreted to mean making judgements and determinations related to receiving (for example, receiving information), transmitting (for example, transmitting information), inputting, outputting, accessing (for example, accessing data in a memory) and so on. In addition, to "judge" and "determine" as used herein may be interpreted to mean making judgements and determinations related to resolving, selecting, choosing, establishing, comparing and so on. In other words, to "judge" and "determine" as used herein may be interpreted to mean making judgements and determinations related to some action.

As used herein, the terms "connected" and "coupled," or any variation of these terms, mean all direct or indirect connections or coupling between two or more elements, and may include the presence of one or more intermediate elements between 2 elements that are "connected" or "coupled" to each other. The coupling or connection between the elements may be physical, logical or a combination of these. For example, "connection" may be interpreted as "access."

As used herein, when 2 elements are connected, these elements may be considered "connected" or "coupled" to each other by using one or more electrical wires, cables and/or printed electrical connections, and, as a number of non-limiting and non-inclusive examples, by using electromagnetic energy, such as electromagnetic energy having wavelengths in the radio frequency, microwave and optical (both visible and invisible) regions.

In the present specification, the phrase "A and B are different" may mean "A and B are different from each other." The terms such as "leave" "coupled" and the like may be interpreted as well.

When terms such as "include," "comprise" and variations of these are used in this specification or in claims, these terms are intended to be inclusive, in a manner similar to the way the term "provide" is used. Furthermore, the term "or" as used in this specification or in claims is intended to be not an exclusive disjunction.

Now, although the present invention has been described in detail above, it should be obvious to a person skilled in the art that the present invention is by no means limited to the embodiments described herein. The present invention can be implemented with various corrections and in various modifications, without departing from the spirit and scope of the present invention defined by the recitations of claims. Consequently, the description herein is provided only for the purpose of explaining examples, and should by no means be construed to limit the present invention in any way.

## Claims

1. A user terminal, comprising:
a receiving section that receives a downlink shared channel scheduled by downlink control information; and
a control section that, when an offset between the downlink control information and the downlink shared channel is less than a given value, controls the receipt of the downlink shared channel based on one transmission configuration indicator state that corresponds to a specific control resource set.

2. The user terminal according to claim 1, wherein the control section assumes that one specific transmission configuration indicator state is configured in association with the specific control resource set.

3. The user terminal according to claim 1, wherein the control section controls the receipt of the downlink shared channel by using a transmission configuration indicator state that is selected, based on a given condition, from among a plurality of transmission configuration indicator states that are configured in advance in association with the specific control resource set.

4. The user terminal according to claim 1, wherein the control section assumes that the transmission configuration indicator state corresponding to the specific control resource set is at least one of a transmission configuration indicator state that is applied to a control resource set for transmitting system information and a transmission configuration indicator state that is applied to a downlink control channel that schedules system information.

5. The user terminal according to claim 1, wherein the control section controls the receipt of the downlink shared channel on the assumption that the downlink shared channel is quasi-co-located with a synchronization signal block that is selected in an initial access procedure.

6. A radio communication method for a user terminal, comprising the steps of:
receiving a downlink shared channel scheduled by downlink control information; and
when an offset between the downlink control information and the downlink shared channel is less than a given value, controlling the receipt of the downlink shared channel based on one transmission configuration indicator state that corresponds to a specific control resource set.
